# EUROPEAN PATENT APPLICATION

(11) **EP 1 666 613 A1**
(43) Date of publication of application: **07.06.2006**
(21) Application number: 04748572.7
(22) Date of filing: 30.07.2004
(51) Int. Cl.: C22B 3/04, C22B 11/00

(54) **IMPROVEMENT TO SILVER AND GOLD LEACHING METHOD WITH THIOUREA SOLUTIONS**

(30) Priority: 04.08.2003 MX PA03006955
(71) Applicant: Universidad Autonoma Metropolitana, C.P. 14387 México, D.F. (MX)
(72) Inventor: LAPIDUS LAVINE, Gretchen Terri, Calle Fresnos 52, C.P. 04650 México, D.F. (MX); LOPEZ ESCUTIA, Maria Concepcion, C.P. 78210 México, San Luis Potosi (MX); OROPEZA GUZMAN, Mercedes Teresita, Dawme, CA 92117 (US); GONZALEZ MARTINEZ, Ignacio, Calle Ocaso No.58, C.P. 04530 México, D.F. (MX); RODRIGUEZ HERNANDEZ, Fernando, Calzada Tenorio 224, Delegacion Tlalpan, C.P. 14330 México (MX); POISOT DIAZ, Maria Elena, Calle Manuel J. Tello 68, C.P. 15670 México, D.F. (MX); GIRON BAUTISTA, Ita, Calle Miguel Hidalgo No.27, C.P. 55330 México, Edo. de Méx. (MX)
(74) Representative: Gervasi, Gemma
(86) International application number: PCT/MX2004/000054
(87) International publication number: WO 2005/028687

(57) **Abstract**

The present invention concerns the mining and mineral treatment industry. Specifically, it relates to a solution composition that permits the use of thiourea. Specifically, the patent refers to a process to form a solution that improves, on one hand, the velocity of gold and silver extraction, from minerals and other materials that contain them, improving the stability of the thiourea in the leaching solution and, on the other, the direct electrorecovery of said metals from the aforementioned solution. The invention consists of the leaching solution that, beforehand or simultaneously, has been subjected to a controlled electro-oxidation to produce formamidine disulfide (FADS) which acts as an oxidizing agent for the mineral phases that contain the gold and silver. In the preferred mode, the FADS is present as 10 to 30% of the total thiourea contained in the solution and the electrodeposition of the metals is performed in the same cell (cathodic compartment) in which the FADS is formed (anodic compartment).

## Description

### FIELD OF THE INVENTION

The present invention concerns the mining and mineral treatment industry. Specifically, it relates to a process that uses thiourea, electro-oxidized under controlled conditions, to form in-situ an oxidizing agent capable of dissolving gold and silver from minerals which contain them and the electrolytic recovery of said metals in the same process.

### BACKGROUND OF THE INVENTION

At present, the processing of gold and silver ores fundamentally depends on the form in which they are found in the mineral, using for this flotation, amalgamation and/or leaching. In this last technique, the solution employed plays an important role in the efficiency and environmental impact of the process.

Basically two commercially implemented leaching techniques exist: cyanidation produces the highest yields in the majority of cases, however, with the problems of toxic residues and low efficiency in refractory minerals (those that contain organic material, arsenic or manganese) or those that contain high concentrations of silver sulfides. The use of thiourea in acid media is a solution to the toxic waste problem since this method does not employ cyanide salts.

One of the great obstacles for the industrialization of the thiourea process to extract silver and gold is the instability of the thiourea solutions themselves. In the presence of strong oxidizing agents, such as ferric ion or hydrogen peroxide, the thiourea irreversibly oxidizes to form a species that is not active for complexing gold and silver.

Another impediment related to the use of thiourea is that the methods employed for precious metal recovery from the leaching solutions results in their contamination, limiting the possibility of their recycle within the process.

Additionally, there exists a disequilibrium with respect to the utilization of electrical energy; on one side of the electrolytic cell, the thiourea is being partially oxidized while, on the other side, separated by a membrane, the generated potential is being wasted on a sacrifice reduction process.

### OBJECTIVES OF THE INVENTION

One objective of the present invention is to avoid the harmful effects of the external oxidizing agents on the thiourea solutions.

Another consists in recovering the gold and silver in their metallic form, once extracted from the mineral, in such a way that the electrical energy is employed in an optimal manner, by oxidizing part of the thiourea to formamidine disulfide in one of the compartments (anodic) and, in the other (cathodic), reducing the dissolved gold and silver reducing to their metallic state.

Other objectives and advantages, that apply the principles and are derived from the present invention may be apparent from the study of the following description and diagrams that are included here for illustrative and not limitative purposes.

### BRIEF DESCRIPTION OF THE INVENTION

In summary, our invention reduces the inconveniences of the instability of thiourea in the presence of strong oxidants, permitting at the same time a clean recovery of the metallic values, and constitutes an improvement of the solution employed for leaching gold and silver from minerals and other materials that contain them, employing thiourea. These improvements are characterized by the controlled electro-oxidation of 10 to 30% of the thiourea originally in the solution and the simultaneous electrowinning of the gold and silver from said solution. On the other hand, it consists of a process which allows the application of this solution in a process which extracts and recovers the metallic values from the minerals which contain them.

For this purpose, the electrochemical cell is formed by the cathodic and the anodic compartments, separated by a membrane. In the anodic compartment, the thiourea is partially oxidized, while in the cathodic compartment, the metals are reduced to their metallic form.

In order to better understand the characteristics of the invention, the following description is accompanied by a diagram, which forms an integral part of the same and is meant to be illustrative but not limitative:

### BRIEF DESCRIPTION OF THE DIAGRAM

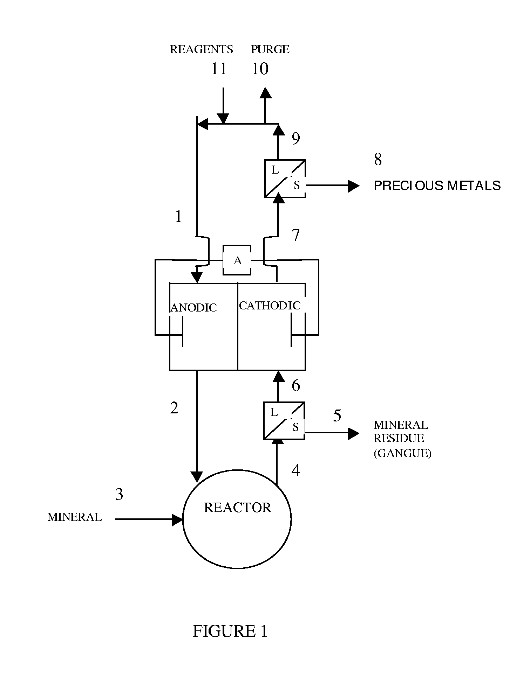

Figure 1 illustrates a block diagram of the process, subject of the present application.

To better understand the invention, a detailed description of the process shown in the diagram will be presented, which is annexed and meant to be illustrative but not limitative

### DETAILED DESCRIPTION OF THE INVENTION

After having performed many experiments, it was found that the first oxidation product of the thiourea, formamidine disulfide (FADS), is capable of selectively oxidizing gold and silver containing minerals, liberating the metals so that they may complex with the remaining thiourea and dissolve in the leaching solution.

Briefly, the process occurs in the following manner, observing Figure 1: an acid thiourea solution (1) is introduced into the electrolytic cell in the anodic compartment (ANODIC), where the thiourea is partially oxidized by an electrical current, applied under controlled conditions, to formamidine disulfide (FADS).

The larger the quantity of thiourea partially oxidized, the better the performance of the solution. However, considering the price of thiourea, it is important to point out that the electro-oxidation should be executed at low voltages and in a proportion no greater than 30% with respect to the total quantity of thiourea in solution in order to achieve the reversible oxidation of the thiourea.

The partially oxidized solution (2) is sent to the leaching reactor, where it is mixed with mineral rich in metal values (3), during a period stipulated for the gold and silver dissolution. Once the leaching is finished, the mixture of pregnant solution (rich in precious metals) and the mineral residue (gangue) (4) is sent to a solid(5)-liquid(6) separation step [L/S]. The solid residue is discarded in the conventional manner (tailing dam). On the other hand, the pregnant solution enters into the cathodic compartment [CATHODIC] of the electrolytic cell, where the metals are reduced and electrodeposited. The solution, now with a low metallic ion content, along with a part of the metallic gold and silver (7) is sent to another solid(8)-liquid(9) separation stage [L/S] to recover the values. After purging a small quantity of solution (10), the resulting stream is made-up with reagents (11) in order to bring the concentrations of the solution up to the initial conditions of (1).

To better understand the invention, one of the many experiments is included as an example, where the adequate quantities of FADS generated in-situ and gold and silver recovery from the pregnant solution (after leaching) were determined.

### EXAMPLE

One liter of aqueous solution containing 15.2 grams of thiourea, with the pH adjusted to 2 with sulfuric acid, was subjected to a reversible potential of 500 mV for 2 hours in a membrane cell, where the anodic and cathodic compartments are separated, to produce in-situ a quantity of FADS, equivalent to the oxidation of 18% of the initial thiourea. Following this step, the solution is placed in contact with 10 grams of sulfide concentrate which contains approximately 8 wt.% silver and 0.08 wt.% gold for 60 hours. After this time, 95% of the original thiourea was intact and more than 94% of the silver and 65% of the gold contained in the mineral were leached. The silver extraction was increased 36% with respect to the amount leached with an equivalent amount of cyanide. After removal of the solid residue, the pregnant solution was subjected to an electrolysis in the cathodic compartment of the same cell, where the thiourea was oxidized. After 2 hours, 98% of the silver and 92% of the gold present in the solution was precipitated.

The variations that the process might have for the electro-oxidation of the thiourea could be in the FADS concentration required in the leaching solution and the percentage of this component with respect to the quantity of mineral to be treated and the silver and gold concentrations that these may contain. However, if at any time an electro-oxidizes solution is employed, the process will be considered within the scope of the invention described in the present application

The invention has been sufficiently described so that a person knowledgeable in the field could reproduce it and obtain the results that we mentioned in the present invention. Any person competent in the field of the present invention is capable of making modifications not described in the present application, however, if the application of these modifications on any material or in the manufacturing process of the same require any part of the process mentioned in the following claims, the material and process should be considered included within the scope of the invention.

## Claims

1. Improvement of the thiourea solutions to leach silver and gold **characterized by** containing a quantity of partially electro-oxidized thiourea.

2. Improvement of the thiourea solutions to leach silver and gold, such as was demanded in the previous claim, **characterized** additionally by a solution which contains formamidine disulfide (FADS) produced in-situ by a controlled electro-oxidation in a proportion of 10 to 30% of the total amount of thiourea contained in the solution.

3. Improvement of the thiourea solutions to leach silver and gold, such as was demanded in either of the two previous claims, **characterized** additionally because the composition of the thiourea leaching solution is formulated in the same process in which the leaching solution is placed in contact with the mineral from which the metallic values are to be leached.

4. Gold and silver leaching and recovery process with partially oxidized thiourea **characterized** as consisting of the thiourea oxidation by the application of an electrical current in a membrane cell, where the anodic and cathodic compartments are separated, before sending the product to the leaching stage and that once concluded the leaching time, the pregnant solution, separated from the mineral residue (gangue), enters the cathodic compartment of the same electrolytic cell in which the thiourea was partially oxidized in the anodic part, where the metals are reduced and electrodeposited.
